# NEUE EUROPÄISCHE PATENTSCHRIFT

(11) **EP 2 198 190 B2**
(45) Veröffentlichungstag und Bekanntmachung des Hinweises auf die Entscheidung über den Einspruch: **07.10.2015**
(45) Hinweis auf die Patenterteilung: 25.07.2012
(21) Anmeldenummer: 08801769.4
(22) Anmeldetag: 29.08.2008
(51) Int. Cl.: F16K 31/06, F16K 27/00

(54) **MAGNETVENTIL**
MAGNETIC VALVE
ÉLECTROVANNE

(30) Priorität: 10.09.2007 DE 202007012652 U
(43) Veröffentlichungstag der Anmeldung: 23.06.2010
(73) Patentinhaber: Bürkert Werke GmbH, 74653 Ingelfingen (DE)
(72) Erfinder: Hettinger, Christoph, 74653 Ingelfingen (DE); Müller, Stefan, 74613 Öhringen (DE)
(74) Vertreter: Prinz & Partner mbB
(86) Internationale Anmeldenummer: PCT/EP2008/007091
(87) Internationale Veröffentlichungsnummer: WO 2009/033576

(56) Entgegenhaltungen:
- EP-A- 1 213 521
- EP-A2- 1 722 137
- DE-A1- 4 309 695
- DE-U1- 20 100 471
- US-A- 2 587 356
- US-A- 3 977 734
- US-A- 5 139 226
- US-B1- 6 328 279

## Beschreibung

Die Erfindung betrifft ein Magnetventil, mit dem eine Fluidverbindung geschaltet werden kann.

Solche Magnetventile sind in verschiedenen Ausgestaltungen bekannt. Ein Beispiel findet sich in der DE 201 00471 U1. Es weist einen Stellantrieb mit zwei Spulen auf, die eine Schaltwippe betätigen. Die Schaltwippe wirkt auf eine Membran ein, die wiederum mit zwei Ventilsitzen zusammenwirken kann. Gleichzeitig bildet die Membran die Trennung zwischen dem Stellantrieb und der Fluidseite des Ventils.

In der US 6, 328, 279 B1 wird ein Magnetventil beschrieben, das ebenfalls zwei Spulen, zwei Ventilsitze, eine Membran und eine Schaltwippe aufweist. Die beiden Ventilsitze werden jeweils abwechselnd geöffnet und geschlossen, wobei in jeder Schaltstellung ein Ventilsitz geöffnet ist.

Allgemein wird versucht, solche Ventile immer kompakter auszuführen. Allerdings wirken sich Fertigungstoleranzen um so gravierender aus, je kompakter Ventile gebaut werden, da die durch den Stellantrieb des Ventils (vorzugsweise eine Magnetspule) erreichbaren Betätigungskräfte mit dem geringer werdenden Bauvolumen stark abnehmen. Gleichzeitig können die Fertigungstoleranzen der Bauteile nur durch einen hohen Aufwand verringert werden. Erschwerend für die Miniaturisierung ist weiterhin die Tatsache, daß der erforderliche Bauraum für die fluidischen und elektrischen Anschlüsse nicht mehr wesentlich vermindert werden kann.

Die Aufgabe der Erfindung besteht darin, ein kompaktes Magnetventil zu schaffen.

Zur Lösung dieser Aufgabe ist erfindungsgemäß ein Doppelventil mit zwei Spulen vorgesehen, die getrennt voneinander angesteuert werden können und jeweils einen Kern aufweisen, einem gemeinsamen Ventilgehäuse, in welchem die Spulen angeordnet sind, einem Flanschgehäuse, das am Ventilgehäuse angebracht ist und in dem zwei Ventilsitze angeordnet sind, und einer Membran, die den beiden Ventilsitzen zugeordnet ist, wobei jede Spule einem Ventilsitz zugeordnet ist, so dass das Doppelventil in drei mögliche Schaltstellungen schaltbar ist: Beide Ventilsitze geschlossen, jeweils ein Sitz geschlossen und ein Sitz geöffnet und beide Sitze offen, wobei die beiden Spulen einen gemeinsamen Eisenkreis aufweisen, wobei für die beiden Spulen ein elektrischer Anschluß vorgesehen ist und wobei ein gemeinsamer Masseanschluß und für jede Spule ein Plus-Anschluß vorgesehen ist.

Das erfindungsgemäße Ventil beruht auf dem Grundgedanken, zwei getrennt schaltbare Fluidanschlüsse vorzusehen, wobei die hierfür notwendigen elektromagnetischen Stellantriebe in einem gemeinsamen Gehäuse zusammengefaßt sind. Dies führt zu einer kompakten Bauform und verringert Fertigungstoleranzen. Durch den gemeinsamen Eisenkreis wird ein kompakter Aufbau erreicht. Durch die Verwendung eines gemeinsamen Masseanschlusses und eines Plus-Anschlusses für jede Spule kann das Doppelventil durch ein Kabel mit nur drei Leitern angesteuert werden.

Vorzugsweise ist vorgesehen, daß die Membran einstückig ausgeführt ist. Dies unterstützt den kompakten Aufbau und vermeidet Toleranzen.

Gemäß einer bevorzugten Ausführungsform ist vorgesehen, daß die Membran im Bereich der Ventilsitze mit jeweils einem Stößel versehen ist, der mit einem der Kerne gekoppelt ist. Auf diese Weise ist eine sehr direkte Übertragung der von den Spulen erzeugten Antriebskräfte auf die Membran möglich.

Vorzugsweise ist vorgesehen, daß die Kerne im Ventilgehäuse verschiebbar geführt und mechanisch mit den Stößeln verbunden sind. Dies führt zu geringen Reibungskräften im elektromagnetischen Stellantrieb, da sämtliche Bauteile, die im Kraftfluß zwischen dem elektromagnetischen Stellantrieb und der Membran liegen, im Ventilgehäuse geführt werden, so daß etwaige Toleranzen bei der Montage des Flanschgehäuses am Ventilgehäuse sich nicht störend auswirken, sondern von der Elastizität der Membran kompensiert werden können.

Vorzugsweise ist vorgesehen, daß jeder Kern zweiteilig ausgeführt ist und aus einem feststehenden Teil und einen verschiebbaren Teil besteht, zwischen denen eine Feder angeordnet ist. Dies verringert die bewegten Massen im elektromagnetischen Stellantrieb und ermöglicht ein schnelles Ansprechen des Ventils.

Vorzugsweise ist vorgesehen, daß die Membran die Form eines Knochens mit einem langgestreckten Mittelabschnitt und zwei verdickten Endabschnitten hat. Eine solche Form der Membran ist optimal an die geometrischen Randbedingungen bei zwei nebeneinanderliegenden Spulen angepaßt, so daß die Membran in einem einzigen Stück bei minimalem Materialeinsatz ausgeführt werden kann.

Gemäß einer Ausführungsform ist vorgesehen, daß die Membran zwischen dem Ventilgehäuse und dem Flanschgehäuse abdichtet. Die Membran erfüllt also eine Doppelfunktion, indem sie zum einen zum Schalten der Fluidverbindungen verwendet wird und zum anderen den elektromagnetischen Stellantrieb von der fluiddurchströmten Seite des Ventils abdichtet.

Gemäß einer Ausführungsform ist vorgesehen, daß das Flanschgehäuse zwei Paare von Fluidanschlüssen aufweist, so daß zwei verschließbare Fluidverbindungen gebildet sind, die jeweils von einem der Fluidanschlüsse eines Paares über einen Ventilsitz zum anderen Fluidanschluß des Paares verlaufen. Das Doppelventil bildet also in kompakter Weise zwei 2/2-Wege-Ventile. Zu diesem Zweck kann insbesondere vorgesehen sein, daß das Flanschgehäuse mit mindestens einem Trennsteg zwischen den beiden Paaren von Fluidanschlüssen versehen ist.

Gemäß einer alternativen Ausführungsform ist vorgesehen, daß das Flanschgehäuse zwei den Ventilsitzen zugeordnete Fluidanschlüsse und einen gemeinsamen Zentralanschluß aufweist, so daß von jedem Fluidanschluß eine verschließbare Fluidverbindung über den Ventilsitz zum Zentralanschluß gebildet ist. Das Doppelventil bildet somit in kompakter Weise ein 3/3-Wege-Ventil, wobei als Besonderheit vorgesehen sein kann, die beiden Ventilsitze zu öffnen, so daß das gesamte Ventil gespült werden kann.

Gemäß einer Ausführungsform sind am Ventilgehäuse und am Flanschgehäuse mindestens zwei Befestigungsaugen vorgesehen, mittels denen das Doppelventil mit einer Anschlußplatte verschraubt werden kann. Alternativ kann das Ventilgehäuse mit mindestens zwei Rastaussparungen versehen sein, in die zwei Rasthaken eines Montagerahmens eingreifen können. In beiden Fällen kann das Doppelventil mit geringem Aufwand montiert werden.

Gemäß einem Aspekt der Erfindung ist eine Baugruppe gebildet aus dem Ventilgehäuse mit elektromagnetischem Stellantrieb einerseits und zwei unterschiedlichen Flanschgehäusen andererseits, nämlich zum einen einem Flanschgehäuse mit zwei Paaren von Fluidanschlüssen, mit dem zwei 2/2-Wege-Ventile ausgebildet werden, und zum anderen einem Flanschgehäuse mit zwei den Ventilsitzen zugeordneten Fluidanschlüssen und einen gemeinsamen Zentralanschluß, mit dem ein 3/3-Wege-Ventil ausgebildet wird. Auf diese Weise kann durch einen einfach zu bewerkstelligenden Austausch der Flanschgehäuse mit demselben Ventilgehäuse entweder das doppelte 2/2-Wege-Ventil oder das 3/3-Wege-Ventil realisiert werden. Insbesondere wenn das Ventilgehäuse mittels einer Rastverbindung montiert wird, ist ein schneller Austausch möglich.

Die Erfindung wird nachfolgend anhand eines Ausführungsbeispiels beschrieben, das in den beigefügten Zeichnungen dargestellt ist. In diesen zeigen:

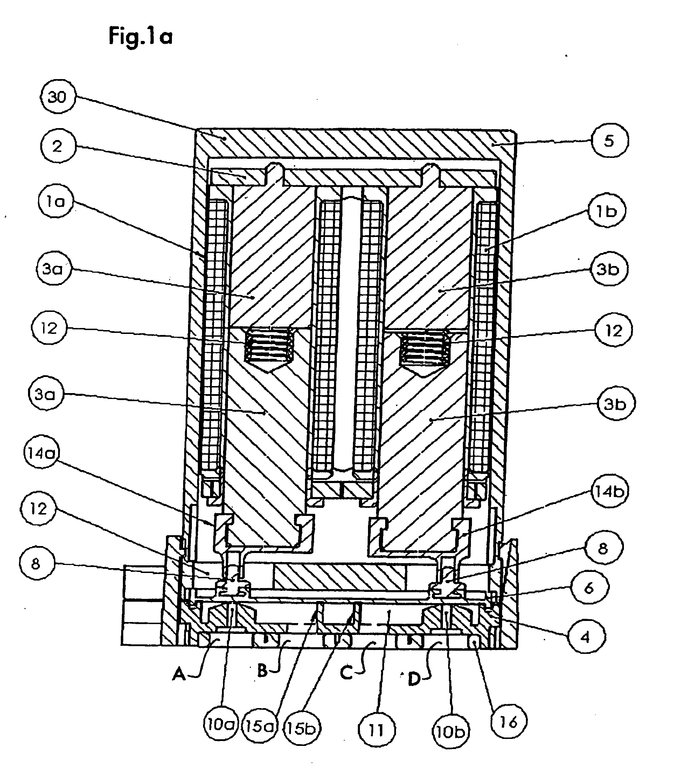

- Figur 1a einen Schnitt durch ein erfindungsgemäßes Doppelventil, wobei ein Flanschgehäuse verwendet wird, mit dem zwei 2/2-Wege-Ventile realisiert werden;

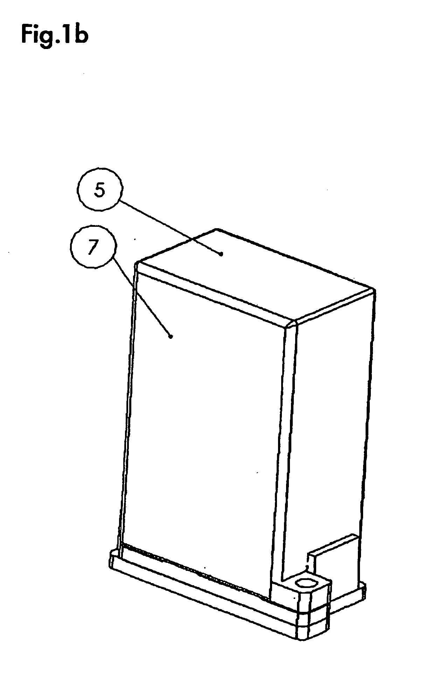

- Figur 1b das Doppelventil von Figur 1 in einer perspektivischen Ansicht;

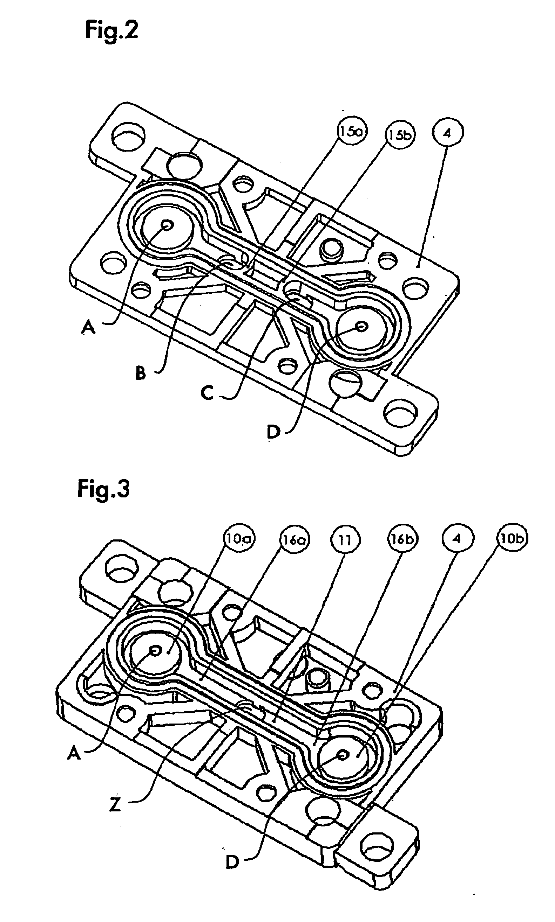

- Figur 2 das beim Doppelventil von Figur 1 verwendete Flanschgehäuse in einer perspektivischen Ansicht;
- Figur 3 ein alternativ zu verwendendes Flanschgehäuse, mit dem ein 3/3-Wege-Ventil realisiert werden kann;

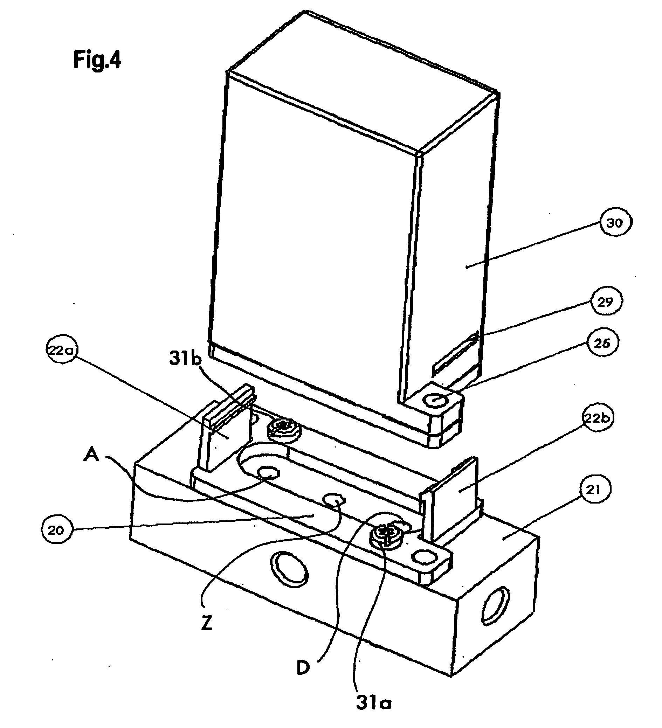

- Figur 4 eine Explosionsansicht eines an einer Grundplatte zu befestigenden Doppelventils; und

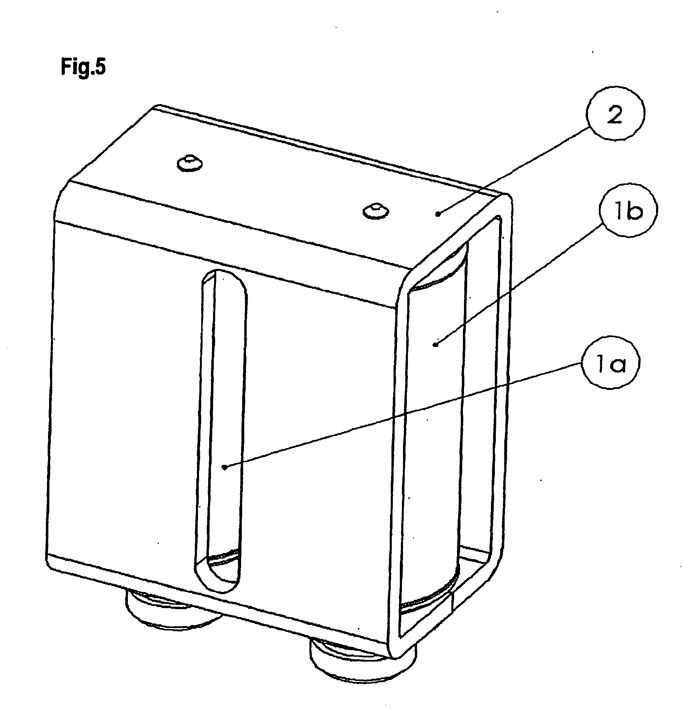

- Figur 5 in einer perspektivischen Ansicht den beim Doppelventil von Figur 1 verwendeten elektromagnetischen Stellantrieb.

Beim erfindungsgemäßen Doppelventil werden sowohl die fluidischen und elektrischen Anschlüsse als auch weitere Ventilinnenteile von 2 Ventilen in einem Gehäuse zusammengefaßt. Dadurch ergibt sich ein sehr kompakter Aufbau der Ventile und zusätzlich eine Kosteneinsparung durch die von beiden Ventilen gemeinsam genutzten Komponenten Ventilgehäuse, Membran, Eisenkreis, elektrischer Anschluß, Spulenumhüllung. Das Doppelventil ist sowohl von den Außenabmessungen als auch den fluidischen und elektrischen Anschlüssen kompatibel zu dem bereits bekanntem 3-Wege Ventil, so daß beide Ventiltypen in Systemen einfach miteinander kombiniert werden können, In einer weiteren Ausführungsform des Doppelventils sind zwar die beiden Antriebe des Ventils voneinander unabhängig schaltbar; der Fluidteil der beiden Ventile ist aber verbunden. Dadurch entsteht ein 3-Wege Ventil mit 3 möglichen Schaltstellungen: Beide Ventilsitze geschlossen; jeweils ein Sitz geschlossen und ein Sitz geöffnet, und beide Sitze offen. Diese Funktion erlaubt z.B. ein Spülen des Ventils bei zwei geöffneten Sitzen.

Das Doppelventil 30 besteht aus zwei Spulen 1 a, 1 b mit einem gemeinsamen Eisenkreis 2, zwei Kernen 3, einem gemeinsamen Flanschgehäuse 4, einem gemeinsamen Ventilgehäuse 5, einem gemeinsamen Deckel 7, einer gemeinsamen Membran 6 und einem gemeinsamen Dichtelement 16. In das Flanschgehäuse 4 sind die Ventilsitze 10a, 10b eingearbeitet.

Die Membran 6 trennt den mediumsberührten Teil des Ventils 11 vom Antriebsteil, gebildet von den Spulen 3. Die Membran wird durch die beiden Kerne 3 betätigt. Die Kerne sind über die Koppelelemente 14 mit der Membran verbunden. In die Membran 6 sind metallische Stößel 8 eingesetzt. In stromlosem Zustand drücken die durch die beiden Druckfedern 12 belasteten Kerne 3a, 3b die Membran auf die im Flanschgehäuse sich befindenden Ventilsitze 10a, 10b und verschließen die Sitze dadurch.

Beim Anlegen von Spannung an einer der Spulen 1a, 1b entsteht im Eisenkreis 2 ein magnetischer Fluß, der den Kern 3a, 3b gegen die Druckfeder 12 in die Spule zieht; dadurch wird die Membran von dem stromlos geschlossenen Ventilsitz 10a abgehoben, und der Ventilsitz ist geöffnet.

Beim Aufbau des Doppelventils als 2-Wege Ventil sind die beiden Bereiche um die beiden Ventilsitze 10a, 10b durch einen oder mehrere Stege 15a, 15b voneinander getrennt. Das Dichtelement 16 dichtet das Ventil zur Platte 21 hin ab. Beim Aufbau als 3/3-Wege Ventil entfallen die Stege 15a, 15b; die Bereiche 16a, 16b um die beiden Ventilsitze 10a, 10b sind über den Kanal 11 miteinander verbunden.

Um das Ventil 30 auf einer Platte fluidisch zu befestigen, wird in einer Ausführungsform zunächst ein Rahmen 20 auf der Platte 21 befestigt. Das Ventil bzw. das Doppelventil wird dann auf den Rahmen 20 aufgesetzt und durch eine lösbare Verbindung, vorzugsweise eine Rastverbindung über Rasthaken 22a, 22b mit dem Rahmen verbunden. Dabei greifen die Rasthaken 22a, 22b in eine Ausnehmung am Ventil 30 ein. Dadurch ist das Ventil mit der Platte fest verbunden, und die fluidischen Anschlüsse des Ventils sind mit denen in der Platte verbunden. Alternativ kann das Ventil 30 auch über die Befestigungsaugen 25 mit der Platte 21 verschraubt werden, ohne daß der Befestigungsrahmen 20 verwendet wird. Der Befestigungsrahmen wird vorzugsweise mit Befestigungsschrauben 31a, 31b an der Platte 21 befestigt.

## Patentansprüche

1. Doppelventil mit zwei Spulen (1a, 1b), die getrennt voneinander angesteuert werden können und jeweils einen Kern (3a, 3b) aufweisen, einem gemeinsamen Ventilgehäuse (5, 7), in welchem die Spulen (3a, 3b) angeordnet sind, einem Flanschgehäuse (4), das am Ventilgehäuse (5, 7) angebracht ist und in dem zwei Ventilsitze (10a, 10b) angeordnet sind, und einer Membran (6), die den beiden Ventilsitzen (10a, 10b) zugeordnet ist, wobei jede Spule (3a, 3b) einem Ventilsitz (10a, 10b) zugeordnet ist, so dass das Doppelventil in drei mögliche Schaltstellungen schaltbar ist: Beide Ventilsitze geschlossen, jeweils ein Sitz geschlossen und ein Sitz geöffnet und beide Sitze offen, wobei die beiden Spulen (1a, 1b) einen gemeinsamen Eisenkreis (2) aufweisen, wobei für die beiden Spulen (1a, 1b) ein elektrischer Anschluß vorgesehen ist und wobei ein gemeinsamer Masseanschluß und für jede Spule ein Plus-Anschluß vorgesehen ist.

2. Doppelventil nach Anspruch 1, **dadurch gekennzeichnet, daß** die Membran (6) einstückig ausgeführt ist.

3. Doppelventil nach Anspruch 1 oder Anspruch 2, **dadurch gekennzeichnet, daß** die Membran (6) im Bereich der Ventilsitze (10a, 10b) mit jeweils einem Stößel (8) versehen ist, der mit einem der Kerne (3a, 3b) gekoppelt ist.

4. Doppelventil nach Anspruch 3, **dadurch gekennzeichnet, daß** die Kerne (3a, 3b) im Ventilgehäuse (5, 7) verschiebbar geführt und mechanisch mit den Stößeln (8) verbunden sind.

5. Doppelventil nach einem der vorhergehenden Ansprüche, **dadurch gekennzeichnet, daß** jeder Kern (3a, 3b) zweiteilig ausgeführt ist und aus einem feststehenden Teil und einen verschiebbaren Teil besteht, zwischen denen eine Feder (12) angeordnet ist.

6. Doppelventil nach einem der vorhergehenden Ansprüche, **dadurch gekennzeichnet, daß** die Membran (6) die Form eines Knochens mit einem langgestreckten Mittelabschnitt und zwei verdickten Endabschnitten hat.

7. Doppelventil nach einem der vorhergehenden Ansprüche, **dadurch gekennzeichnet, daß** die Membran (6) zwischen dem Ventilgehäuse (5) und dem Flanschgehäuse (4) abdichtet.

8. Doppelventil nach einem der vorhergehenden Ansprüche, **dadurch gekennzeichnet, daß** das Flanschgehäuse (4) zwei Paare von Fluidanschlüssen (A, B;C, D) aufweist, so daß zwei verschließbare Fluidverbindungen (A-B, C-D) gebildet sind, die jeweils von einem der Fluidanschlüsse (A, C) eines Paares über einen Ventilsitz (10a, 10b) zum anderen Fluidanschluß (B, D) des Paares verlaufen.

9. Doppelventil nach Anspruch 8, **dadurch gekennzeichnet, daß** das Flanschgehäuse (4) mit mindestens einem Trennsteg (15a, 15b) zwischen den beiden Paaren von Fluidanschlüssen (A, B; C, D) versehen ist.

10. Doppelventil nach einem der Ansprüche 1 bis 7, **dadurch gekennzeichnet, daß** das Flanschgehäuse (4) zwei den Ventilsitzen (10a, 10b) zugeordnete Fluidanschlüsse (A, D) und einen gemeinsamen Zentralanschluß (Z) aufweist, so daß von jedem Fluidanschluß (A, D) eine verschließbare Fluidverbindung über den Ventilsitz (10a, 10b) zum Zentralanschluß (Z) gebildet ist.

11. Doppelventil nach einem der vorhergehenden Ansprüche, **dadurch gekennzeichnet, daß** am Ventilgehäuse (5, 7) und am Flanschgehäuse (4) mindestens zwei Befestigungsaugen (25) vorgesehen sind, mittels denen das Doppelventil mit einer Anschlußplatte (21) verschraubt werden kann.

12. Doppelventil nach einem der Ansprüche 1 bis 10, **dadurch gekennzeichnet, daß** das Ventilgehäuse mit mindestens zwei Rastaussparungen (29) versehen ist, in die zwei Rasthaken (22a, 22b) eines Montagerahmens (20) eingreifen können.

13. Baugruppe mit einem Ventilgehäuse (5, 7) mit elektromagnetischen Stellantrieb gemäß Anspruch 1, einem Flanschgehäuse gemäß Anspruch 8 und einem Flanschgehäuse gemäß Anspruch 10, wobei die beiden Flanschgehäuse (4) gegeneinander austauschbar sind.

## Claims

1. A double valve comprising two coils (1a, 1b) which can be piloted separately from each other and each have a core (3a, 3b), a common valve housing (5, 7) in which the coils (3a, 3b) are arranged, a flange housing (4) mounted to the valve housing (5, 7) and in which two valve seats (10a, 10b) are arranged, and a diaphragm (6) associated with the two valve seats (10a, 10b), each coil (3a, 3b) being associated with one valve seat (10a, 10b), so that the double valve is switchable to three possible switching positions: both valve seats closed, one seat closed and one seat open, respectively, and both seats open, the two coils (1a, 1b) having a common ferromagnetic circuit (2), an electrical connection being provided for the two coils (1a, 1b), and provision being made for a common ground connection and for a positive connection for each coil.

2. The double valve according to claim 1, **characterized in that** the diaphragm (6) is formed in one piece.

3. The double valve according to claim 1 or claim 2, **characterized in that** in the area of the valve seats (10a, 10b), the diaphragm (6) is respectively provided with a tappet (8) coupled with one of the cores (3a, 3b).

4. The double valve according to claim 3, **characterized in that** the cores (3a, 3b) are shiftably guided in the valve housing (5, 7) and are mechanically connected with the tappets (8).

5. The double valve according to any of the preceding claims, **characterized in that** each core (3a, 3b) is configured in two parts and is made up of a fixed part and a shiftable part, a spring (12) being arranged therebetween.

6. The double valve according to any of the preceding claims, **characterized in that** the diaphragm (6) has the shape of a bone having an elongated central portion and two thickened end portions.

7. The double valve according to any of the preceding claims, **characterized in that** the diaphragm (6) seals between the valve housing (5) and the flange housing (4).

8. The double valve according to any of the preceding claims, **characterized in that** the flange housing (4) has two pairs of fluidic connections (A, B; C, D) so that two closable fluidic communications (A-B, C-D) are formed, each extending from one of the fluidic connections (A, C) of a pair via a valve seat (10a, 10b) to the other fluidic connection (B, D) of the pair.

9. The double valve according to claim 8, **characterized in that** the flange housing (4) is provided with at least one separating web (15a, 15b) between the two pairs of fluidic connections (A, B; C, D).

10. The double valve according to any of claims 1 to 7, **characterized in that** the flange housing (4) has two fluidic connections (A, D) associated with the valve seats (10a, 10b) and a common central connection (Z) so that a closable fluidic communication is formed from each fluidic connection (A, D) via the valve seat (10a, 10b) to the central connection (Z).

11. The double valve according to any of the preceding claims, **characterized in that** the valve housing (5, 7) and the flange housing (4) are provided with at least two fastening eyes (25) by means of which the double valve can be screwed to a connecting plate (21).

12. The double valve according to any of claims 1 to 10, **characterized in that** the valve housing is provided with at least two latching recesses (29) into which two latching hooks (22a, 22b) of a mounting frame (20) can engage.

13. An assembly comprising a valve housing (5, 7) which has an electromagnetic actuating drive according to claim 1, a flange housing according to claim 8 and a flange housing according to claim 10, the two flange housings (4) being interchangeable.

## Revendications

1. Soupape double, comportant deux bobines (1 a, 1 b) qui peuvent être pilotées séparément l'une de l'autre et qui présentent chacune un noyau (3a, 3b), un boîtier de soupape (5, 7) commun dans lequel les bobines (3a, 3b) sont agencées, un boîtier de bride (4) qui est monté sur le boîtier de soupape (5, 7) et dans lequel deux sièges de soupape (10a, 10b) sont agencés, et une membrane (6) associée aux deux sièges de soupape (10a, 10b), chaque bobine (3a, 3b) étant associée à un siège de soupape (10a, 10b) de telle sorte que la soupape double peut être commutée dans trois positions de commutation possibles : les deux sièges de soupape fermés, un siège fermé et un siège ouvert, respectivement, et les deux sièges ouverts, les deux bobines (1a, 1b) présentant un circuit ferromagnétique (2) commun, une connexion électrique étant prévue pour les deux bobines (1a, 1b), et une connexion à la masse commune et une connexion positive pour chaque bobine étant prévues.

2. Soupape double selon la revendication 1, **caractérisée en ce que** la membrane (6) est réalisée d'un seul tenant.

3. Soupape double selon la revendication 1 ou la revendication 2, **caractérisée en ce que** dans la zone des sièges de soupape (10a, 10b), la membrane (6) est respectivement pourvue d'un poussoir (8) qui est couplé à l'un des noyaux (3a, 3b).

4. Soupape double selon la revendication 3, **caractérisée en ce que** les noyaux (3a, 3b) sont guidés de manière déplaçable dans le boîtier de soupape (5, 7) et sont reliés mécaniquement aux poussoirs (8).

5. Soupape double selon l'une des revendications précédentes, **caractérisée en ce que** chaque noyau (3a, 3b) est réalisé en deux pièces et est composé d'une partie fixe et d'une partie déplaçable entre lesquelles un ressort (12) est agencé.

6. Soupape double selon l'une des revendications précédentes, **caractérisée en ce que** la membrane (6) a la forme d'un os avec un tronçon central allongé et deux tronçons d'extrémité gonflés.

7. Soupape double selon l'une des revendications précédentes, **caractérisée en ce que** la membrane (6) étanche entre le boîtier de soupape (5) et le boîtier de bride (4).

8. Soupape double selon l'une des revendications précédentes, **caractérisée en ce que** le boîtier de bride (4) présente deux paires de connexions fluidiques (A, B ; C, D) de sorte que deux liaisons fluidiques (A-B, C-D) pouvant être fermées sont réalisées, lesquelles s'étendent respectivement de l'une des connexions fluidiques (A, C) d'une paire, via un siège de soupape (10a, 10b) vers l'autre connexion fluidique (B, D) de la paire.

9. Soupape double selon la revendication 8, **caractérisée en ce que** le boîtier de bride (4) est pourvu d'au moins une barrette de séparation (15a, 15b) entre les deux paires de connexions fluidiques (A, B ; C, D).

10. Soupape double selon l'une des revendications 1 à 7, **caractérisée en ce que** le boîtier de bride (4) présente deux connexions fluidiques (A, D) associées aux sièges de soupape (10a, 10b) et une connexion centrale (Z) commune, de sorte qu'une liaison fluidique pouvant être fermée est réalisée depuis chaque connexion fluidique (A, D), via le siège de soupape (10a, 10b) vers la connexion centrale (Z).

11. Soupape double selon l'une des revendications précédentes, **caractérisée en ce qu'**au moins deux oeillets de fixation (25) au moyen desquels la soupape double peut être vissée sur une plaque de raccordement (21) sont prévus sur le boîtier de soupape (5, 7) et sur le boîtier de bride (4).

12. Soupape double selon l'une des revendications 1 à 10, **caractérisée en ce que** le boîtier de soupape est pourvu d'au moins deux évidements d'enclenchement (29) dans lesquels deux crochets d'enclenchement (22a, 22b) d'un cadre de montage (20) peuvent s'engager.

13. Ensemble comportant un boîtier de soupape (5, 7) qui présente un mécanisme de commande électromagnétique selon la revendication 1, un boîtier de bride selon la revendication 8, et un boîtier de bride selon la revendication 10, les deux boîtiers de bride (4) pouvant être remplacés l'un par l'autre.
